# EUROPÄISCHE PATENTSCHRIFT

(11) **EP 2 368 415 B1**
(45) Veröffentlichungstag und Bekanntmachung des Hinweises auf die Patenterteilung: **20.02.2013**
(21) Anmeldenummer: 11401046.5
(22) Anmeldetag: 22.03.2011
(51) Int. Cl.: A01C 7/04, A01C 7/08

(54) **Pneumatische Einzelkornsämaschine**
Pneumatic single grain seeder
Semoir monograine pneumatique

(30) Priorität: 26.03.2010 DE 102010016152; 01.10.2010 DE 102010037913
(43) Veröffentlichungstag der Anmeldung: 28.09.2011
(73) Patentinhaber: Amazonen-Werke H. Dreyer GmbH & Co. KG, 49205 Hasbergen (DE)
(72) Erfinder: Brüggemann, Klaus, 27777, Ganderkesee (DE); Mertens, Daniel, 26123, Oldenburg (DE)

(56) Entgegenhaltungen:
- EP-A1- 1 825 737
- EP-A1- 2 067 396
- DE-A1- 19 745 098
- DE-C1- 3 805 148
- US-A1- 2004 206 283
- US-A1- 2006 037 520

## Beschreibung

Die Erfindung betrifft eine pneumatische Einzelkornsämaschine gemäß des Oberbegriffes des Patentanspruches 1.

Eine derartige pneumatische Einzelkornsämaschine ist beispielsweise durch die EP 0 598 636 B1 bekannt. Bei dieser pneumatischen Einzelkornsämaschine können über die der Vereinzelungstrommel zugeordneten Abstreifereinrichtung die Samenkörner von den Perforationen abgestreift werden bevor sie in die Einmündungsöffnungen der Ausbringleitungen gelangen, um so zumindest einige der Ausbringleitungen nicht mit Saatkörnern zu beaufschlagen, so dass Fahrgassen angelegt oder die Arbeitsbereite reduziert werden kann. Es kann jedoch trotzdem vorkommen, dass nicht sämtliche Samenkörner in vorgesehener Weise abgestreift werden, so dass dennoch einige Samenkörner in die Einmündungsöffnungen der Ausbringleitungen, die an sich nicht mit Saatkörnern beschickt werden sollen, gelangen können.

Durch die EP 0 328 858 A ist es bekannt, bei einer pneumatischen Verteilmaschine mit einem Verteilerkopf die Einmündungsöffnungen der Ausbringleitungen über Schwenkklappen abzusperren, so dass kein Saatgut in diese abzusperrenden Ausbringleitungen gelangt.

Eine derartige Absperrung ist jedoch bei gattungsgemäßen Einzelkornsämaschinen bisher nicht möglich, weil hier, wie beispielsweise die DE 10 2005 013 397 A1 und EP 2067396 A1 zeigen, im unteren Vorratsbehälterbereich in der Nähe der Vereinzelungstrommel Druckluft eingeblasen wird, um einen Durchmischungsbereich des Saatgutes sowie eine Fludisierung des Saatgutes im Anlagerungsbereich der Saatkörner an die Perforationsreihen zur besseren Anlagerung der Saatkörner zu erreichen. Wenn nun hier eine Absperrung einzelner Ausbringleitungen erfolgt, steigt der Druck im Vorratsbehälter an, so dass die Druckdifferenz zwischen dem Innenraum der Vereinzelungstrommel und dem Außenbereich der Vereinzelungstrommel erhöht wird, so dass das Einblasen von Druckluft in den unteren Bereich des Saatgutvorrates zur Fluidisierung gestört wird und so keine ausreichende Fluidisierung des Saatgutes mehr erreichbar ist.

Der Erfindung liegt die Aufgabe zugrunde, bei Absperrung von Ausbringleitungen in einfacher Weise für ein Konstanthalten des statischen und dynamischen Druckes im Überdruckbereich der Vereinzelung zu sorgen.

Diese Aufgabe wird erfindungsgemäß dadurch gelöst, dass zumindest einigen Ausbringleitungen motorisch betätigbare Absperrmittel zugeordnet sind, dass dem Gehäuse zumindest eine Überdruckventileinrichtung und/oder Überdruckbegrenzungseinrichtung zugeordnet ist. Infolge dieser Maßnahmen wird bei Absperrung von Ausbringleitungen in einfacher Weise ein Konstanthalten der Druckdifferenz zwischen dem Innenraum und der Vereinzelungstrommel und dem Außenbereich der Vereinzelungstrommel erreicht. Dies hat gleichzeitig zur Folge, dass die Fludisierung durch das Einblasen von Druckluft im unteren Bereich des Vorratsbehälters keinen Einfluss oder nennenswerten Einfluss auf das Druckniveau im Vereinzelungsbereich hat. Somit wird auch bei einer teilweisen Absperrung von Ausbringleitungen weiterhin eine gute Vereinzelung der Saatkörner und deren Anlagerung an den Perforationen der Vereinzelungstrommel gewährleistet.

Um den Druck im Überdruckbereich der Vereinzelung in ausreichender Weise konstant zu halten, ist vorgesehen, dass bei überschreiben eines festgelegten Grenzwertes Luft aus dem Gehäuse über die Überdruckventileinrichtung und/oder Überdruckbegrenzungseinrichtung entweichen kann. In einfacher Weise lässt sich die Überdruckventileinrichtung und/oder Überdruckbegrenzungseinrichtung dadurch ausgestalten, dass die Überdruckventileinrichtung und/oder Überdruckbegrenzungseinrichtung als einen Spalt zwischen den Wänden des Gehäuses abdeckende elastische Dichtung ausgebildet ist.

In einfacher Weise lässt sich der Druck auch dadurch konstant halten, dass die Überdruckventileinrichtung und/oder Überdruckbegrenzungseinrichtung als zumindest einer von im Gehäuse angeordnete Aussparung und/oder Durchlass, die von elastischen Abdeckelementen abgedeckt sind, ausgebildet ist.

Eine einfache Ausgestaltung des elastischen Abdeckelementes lässt sich dadurch erreichen, dass das elastische Abdeckelement als Dichtlippe ausgebildet ist.

Damit der gewünschte Überdruck in einfacher Weise entsprechend den vorgegebenen Bedingungen an den erforderlichen Wert angepasst werden kann, ist vorgesehen, dass die Überdruckventileinrichtung und/oder Überdruckbegrenzungseinrichtung mittels vorzugsweise motorischer Einstellmittel einstellbar ist.

Eine Vereinfachung der Druckbegrenzungseinrichtung ist dadurch zu erreichen, dass die Überdruckventileinrichtung und/oder Überdruckbegrenzungseinrichtung den Absperrmitteln zugeordnet ist.

Infolge dieser Maßnahme lassen sich die Elemente der Überdruckventileinrichtung und/oder Überdruckbegrenzungseinrichtung in die jeweiligen Absperrmittel integrieren. Hierdurch ergibt sich eine sehr einfache Ausgestaltung dieser Elemente. Es ist nicht erforderlich separate Elemente der Überdruckventileinrichtung und/oder Überdruckbegrenzungseinrichtung zusätzlich vorzusehen.

Eine einfache Ausgestaltung lässt sich dadurch erreichen, dass die Absperrmittel als vor die Einmündungsöffnung bringbare Absperrschieber und/oder Absperrklappen ausgebildet sind, dass zwischen der Einmündungsöffnung unter dem vor die Einmündungsöffnung sich in Absperrstellung befindliche Absperrschieber und oder Absperrklappe sich ein derartiger Spalte befindet, durch den Luft aus dem Gehäuse entweichen kann.

Weitere Einzelheiten der Erfindung sind der Beispielsbeschreibung und den Zeichnungen zu entnehmen. Hierbei zeigen
- Fig. 1: das Vereinzelungsgehäuse mit der Vereinzelungstrommel und der Vereinzelungsvorrichtung, ohne seitliche Lagerungselemente der Vereinzelungstrommel und ohne Saatgutvorratsbehälter der Einzelkornsämaschine in perspektivischer Ansicht, wobei die vordere Seitenwand abgenommen ist,

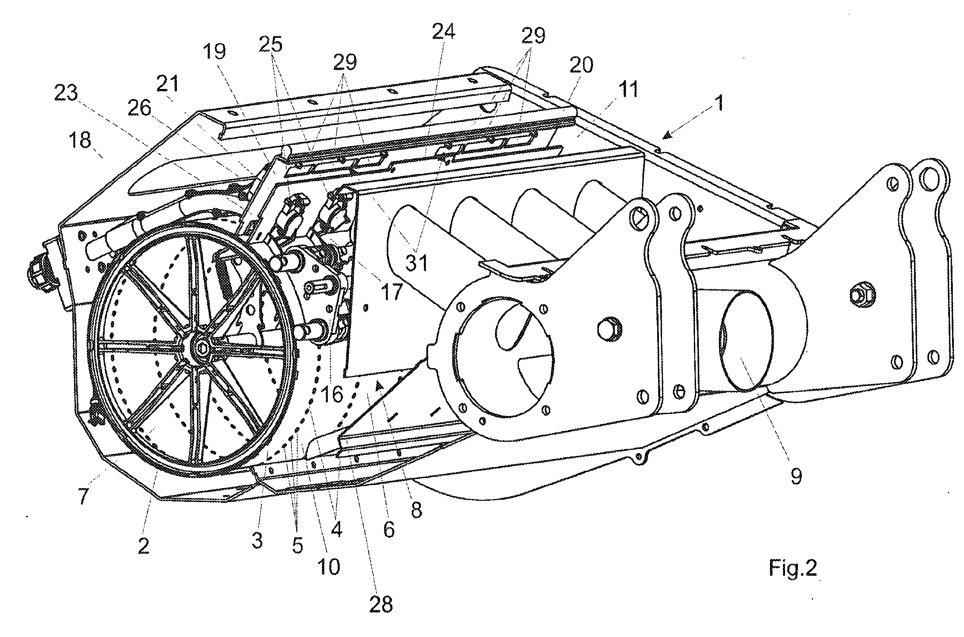

- Fig. 2: das Vereinzelungsgehäuse mit der Vereinzelungstrommel gemäß Fig. 1 in Seitenansicht,

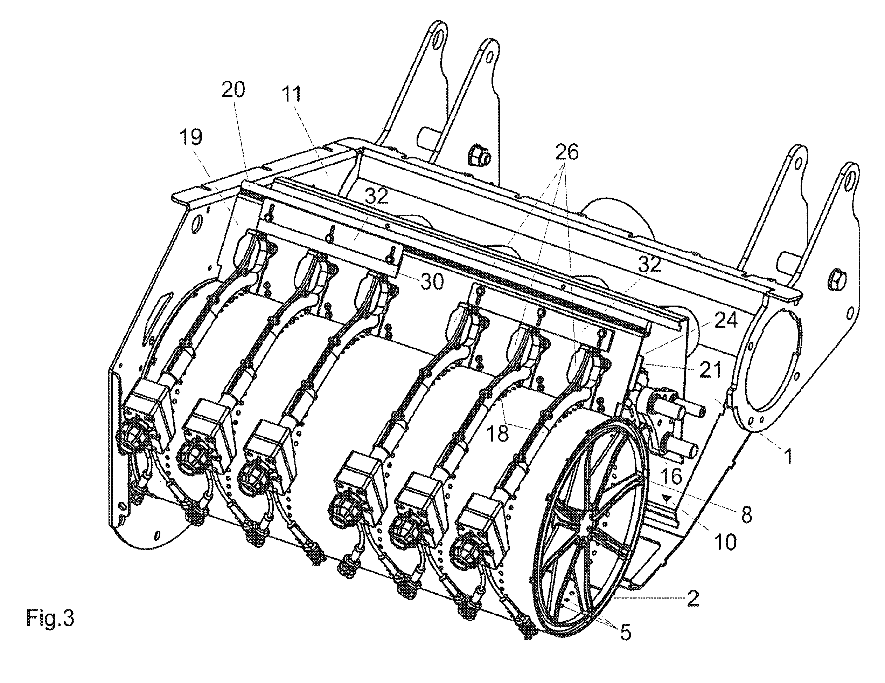

- Fig. 3: die Vereinzelungseinrichtung in perspektivischer Darstellung,
- Fig. 4: ein weiteres Vereinzelungsgehäuse mit der Vereinzelungstrommel und der Vereinzelungsvorrichtung, ohne seitliche Lagerungselemente der Vereinzelungstrommel und ohne Saatgutvorratsbehälter der Einzelkornsämaschine in perspektivischer Ansicht, wobei die vordere Seitenwand abgenommen ist,
- Fig. 5: das Vereinzelungsgehäuse mit der Vereinzelungstrommel gemäß Fig. 5 in Seitenansicht,
- Fig. 6: der Übergabereich der Saatkörner von der Vereinzelungstrommel gemäß Fig. 4 in die Saatleitungen mit den Absperrvorichtungen die Vereinzelungseinrichtung in Seitenansicht und vergrößertem Maßstab und
- Fig. 7: der Übergabereich der Saatkörner von der Vereinzelungstrommel in die Saatleitungen mit den Absperrvorichtungen die Vereinzelungseinrichtung gemäß Fig. 6 in vergrößertem Maßstab.

Die Einzelkornsämaschine weist das Vereinzelungsgehäuse 1 mit der darin drehbar gelagerten und angetriebenen Vereinzelungstrommel 2, auf. Über eine nicht dargestellte Antriebsvorrichtung wird die Vereinzelungstrommel 2 in Rotation versetzt. Oberhalb der Vereinzelungstrommel 2 ist ein nicht dargestellter Vorratsbehälter angeordnet. In den Umfangsmantel 3 der Vereinzelungstrommel 2 sind kreisförmig in Perforationsreihen 4 angeordnete Perforationen 5 angebracht. Der Vorratsbehälter und das Vereinzelungsgehäuse 1 werden auf der Vereinzelungsseite 6 der Trommel 2 mit einem Überdruck beaufschlagt. Somit entsteht eine Druckdifferenz zwischen dem Innenraum 7 der Vereinzelungstrommel 2 und dem Außenbereich 6 der Vereinzelungstrommel 2 in deren Vereinzelungsbereich 8. Die Druckdifferenz wird durch ein nicht dargestelltes Gebläse erzeugt. Das Gebläse ist über den Anschlussstutzen 9 an das Vereinzelungsgehäuse mittels einer Luftleitung angeschlossen. Wenn die Vereinzelungstrommel 2 durch den Saatgutvorrat, der sich im Vorratsbereich 10 des Vereinzelungsgehäuses 1 unterhalb des nicht dargestellten Vorratsbehälters und zumindest in dem unteren Bereich der Vereinzelungstrommel 2 in dem Vereinzelungsgehäuse 1 befindet, geführt wird, lagern sich an der Perforationen auf der Außenseite 6 der perforierten Trommel 2 Samenkörner an. Die Seitenwände 11 des Vereinzelungsgehäuses 1 erstrecken sich parallel zur Bewegungsrichtung 12 der Trommel 1 und wirken zumindest annähernd abdichtend mit der Trommel 1 zusammen.

Des Weiteren ist der Trommel 2 eine die an die Perforationen 5 angelegte Druckdifferenz zum Ablösen der Samenkörner von den Perforationen 5 unterbrechende Abdeckeinrichtung 13 im Innenraum 7 der Trommel 2 angeordnet. Diese Abdeckeinrichtung 13 weist auf einer am Vereinzelungsgehäuse 1 angeordneten Welle 14 drehbar gelagerte walzenartige Elemente 15 auf.

Im Vereinzelungsbereich 8 der Trommel 2 ist zwischen dem Saatgutvorratsbereich 10 und dem Bereich, dem die Abdeckeinrichtung 13 zugeordnet ist, eine Abstreifereinrichtung 16 angeordnet, um Doppelbelegungen an den Perforationen 5 zu vermeiden.

Weiterhin weist die Einzelkornsämaschine bis an die Trommeloberfläche der Trommel 2 heranreichende, mit Einmündungsöffnungen 17 versehene Ausbringleitungen 18 auf, welche zu Ausbringelementen, wie beispielsweise Säscharen, führen. Mittels dieser Ausbringleitungen 18 sind die von der Vereinzelungstrommel 2 vereinzelten Saatkörner den Ausbringelementen mittels eines Luftstromes über die Ausbringleitungen 18 zuführbar. Hierbei reicht jeweils das eine Ende der Ausbringleitungen 18 mit ihrer jeweiligen Einmündungsöffnung 17 bis an die Trommeloberfläche der Trommel 2 heran, um so eine sichere Übergabe des vereinzelten Saatkornes über die jeweilige Einmündungsöffnung 17 in die jeweilige Ausbringleitung 18 zu gewährleisten.

Die im Bereich der Ausbringleitungen 18 liegende Wand 19 des Vereinzelungsgehäuses 1 ist gegenüber den Eingangsöffnungen 17 der Ausbringleitungen 18 in Drehrichtung versetzt angeordnet und durch die Dichtung 20 gegenüber den weiteren, jedoch nicht dargestellten Wände des Vereinzelungsgehäuses abgedichtet. Vor der Gehäusewand 19 ist beabstandet die bis an die Trommeloberfläche 6 heranreichende Absperrwand 21 im Bereich der Eingangsöffnungen 17 der Ausbringleitungen 18 angeordnet. Somit befindet sich beabstandet hinter der Absperrwand 21 die Gehäusewand 19, die bis zumindest annähernd bis an die Trommeloberfläche 6 heranreicht. Die Absperrwand 21 ist derart angeordnet und/oder ausgebildet ist, dass zumindest eine Luftdurchtrittsöffnung 22 oberhalb der Einmündungsöffnungen 17 der Ausbringleitungen 18 zu dem Raum 23 zwischen der Absperrwand 21 und der Gehäusewand 19 vorhanden ist. Die Absperrwand 21 endet mit ihrer oberen Kante 24 zur Schaffung einer Luftdurchtrittsöffnung 22 beabstandet zu den Wänden des Gehäuses 1 endet. Somit herrscht in dem Vereinzelungsraum, der von dem Vereinzelungsbereich 8 definiert wird, der gleiche Druck wie im Raum 23 zwischen der Absperrwand 21 und Gehäusewand 20.

Den Einmündungsöffnungen 17 der Ausbringleitungen 18 sind als vor die Einmündungsöffnungen 17 als verschwenkbare Klappen 25 ausgebildete Absperrmittel angeordnet. Diese Absperrmittel 25 sind mittels motorischer Antriebe 26 betätigbar und in eine die Einmündungsöffnungen 17 freigebende und eine die Einmündungsöffnungen 17 absperrende Stellung verschwenkbar.

Durch das Absperren der jeweiligen Einmündungsöffnung 17 der Ausbringleitungen 18 wird der Luftabfluss aus dem Druckbereich des Vereinzelungsgehäuses 1 eingeschränkt, so dass durch die zugeführte Druckluft über den Anschlussstutzen 9 in den Vereinzelungsbereich 8 des Vereinzelungsgehäuses 1 der Druck ansteigt. Hierdurch wird die durch den Kanal 27 unterhalb der unter den Saatgutvorratsbereich begrenzenden Bodenplatte 28, die im Bereich der Trommel 2 mit nicht dargestellten Durchtrittsöffnungen versehen ist, und das Eintreten der Druckluft in den Vereinzelungsbereich des Saatgutes behindert, so dass die hier durchtretende Luft nicht mehr in ausreichender Weise das Saatgut im Anlagerungsbereich auflockern bzw. fludisieren kann. Hierdurch erhöht sich der dynamische und statische Druck in nachteiliger Weise.

Um auch bei dem Absperren einiger Absperrleitungen 18 durch die Absperrklappen 25 der Druck nicht ansteigen zu lassen, sondern konstant halten zu können, so dass ein bestimmter Druck nicht überschritten wird, sind in der Wand 19 des Vereinzelungsgehäuses 1 als Aussparungen 29 ausgebildete Öffnungen angeordnet, welche durch elastische Abdeckelemente 30 abgedeckt sind. Die Durchtrittsöffnungen 29 in Verbindung mit den elastischen Abdeckelementen 30 bilden eine Überdruckventileinrichtung 31 und/oder Überdruckbegrenzungseinrichtung. Wenn der Druck über einen festgelegten Wert ansteigt, drückt die Luft die elastischen Abdeckelemente 30 von den in der Wand 19 des Gehäuses 1 angeordneten Aussparungen 30 weg, so dass die überschüssige Luft entweicht und durch die Aussparungen 29 nach außen strömt.

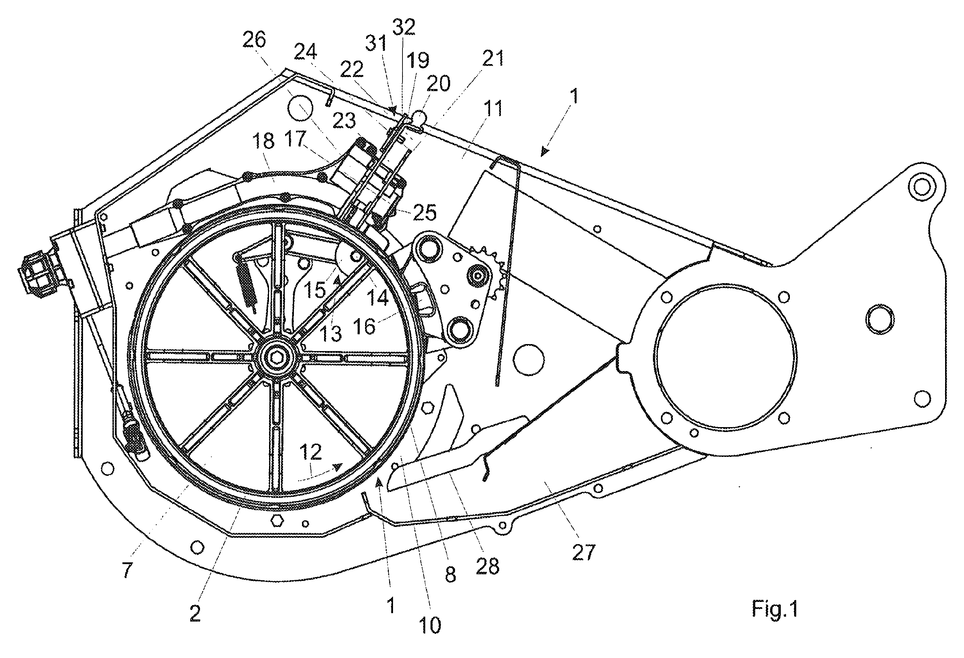

Somit wird also die Überdruckventileinrichtung und/oder Überdruckbegrenzungseinrichtung 31 als von im Gehäuse 1 angeordneten Aussparungen 29, die von elastischen Abdeckelementen 30 abgedeckt sind, gebildet. Hierbei kann die Elastizität des Abdeckelementes 30 bzw. der Öffnungsdruck, bei dem die elastischen Abdeckelemente 30 die in dem Gehäuse 1 angeordneten als Durchlässe 29 ausgebildeten Aussparungen freigeben, mittels der als Einstellplatte 32 ausgebildeten Einstellmittel eingestellt werden. Diese Einstellmittel 32 sind auf der linken Darstellung in Fig. 1 so eingestellt, dass die elastischen Abdeckmittel 30 die Aussparungen 29 früher freigeben als auf der rechten Seite, wo die Abdeckmittel 32 weiter nach unten gestellt sind, so dass dort erst beim höheren Druck eine Öffnung stattfindet.

Diese als Platten 32 ausgebildeten Einstellmittel können mit motorischen Einstellmitteln, die nicht dargestellt sind, eingestellt werden, so dass eine entsprechende Anpassung möglich ist.

Somit können über die als mit elastischen Abdeckelementen 30 abgedeckten Aussparungen 29 ausgebildeten Überdruckventileinrichtungen und Überdruckbegrenzungseinrichtung 31 beim Überschreiten eines festgelegten Grenzwertes Luft aus dem Gehäuse 1 der Vereinzelungsvorrichtung entweichen. Somit ist also in dem Gehäuse 1 zumindest eine Überdruckventileinrichtung oder/und Überdruckbegrenzungseinrichtung 31 angeordnet.

Auch die zwischen den einzelnen Wänden des Vereinzelungsgehäuses 1 angeordneten Dichtlippen 20, die jeweils einen Spalt zwischen den Wänden des Gehäuses 1 abdecken so ausgestaltet sein, dass sie als Überdruckventileinrichtung und/oder Überdruckbegrenzungseinrichtung 31 arbeiten, in dem sie beim Überschreiten eines bestimmten Druckes Luft aus dem Überdruckbereich 10 des Vereinzelungsgehäuses 1 entweichen kann.

Somit lässt sich also beim Absperren von Ausbringleitungen 18 in einfacher Weise ein Konstanthalten der Druckdifferenz zwischen dem Innenraum 7 der Vereinzelungstrommel 2 und dem Außenbereich 8 der Vereinzelungstrommel 2 erreichen. Es wird also bei Absperrung der Ausbringleitungen 18 für ein Konstanthalten des statischen und dynamischen Drucks im Überdruckbereich der Vereinzelungsvorrichtung gesorgt.

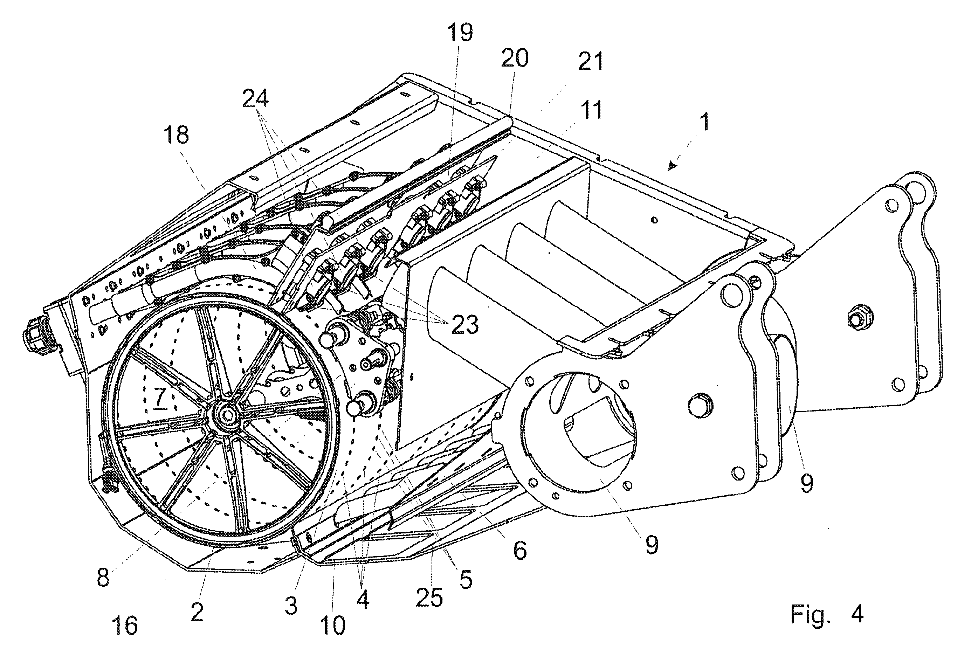

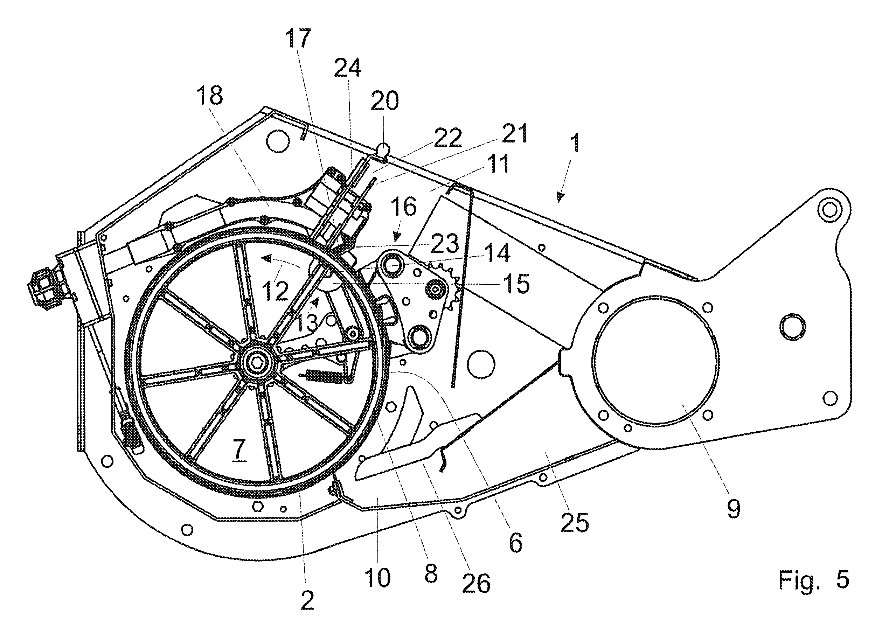

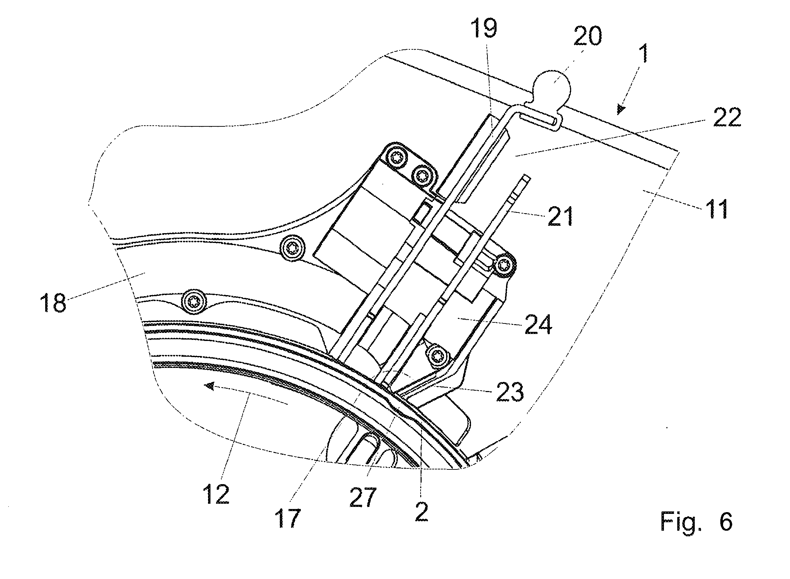

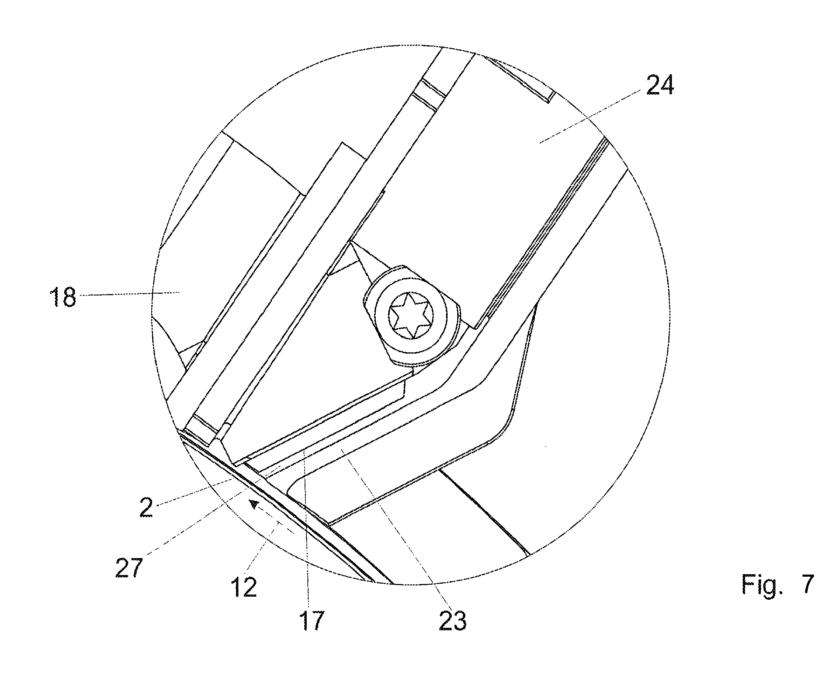

Im Folgenden wird die Einzelkornsämaschine gemäß Fig. 4 bis 7 beschrieben.

Vor der Gehäusewand 19 der Einzelkornsämaschine gemäß Fig. 4 bis 7 ist beabstandet die bis an die Trommeloberfläche 6 heranreichende Absperrwand 21 im Bereich der Eingangsöffnungen 17 der Ausbringleitungen 18 angeordnet. Somit befindet sich beabstandet hinter der Absperrwand 21 die Gehäusewand 19, die bis zumindest annähernd bis an die Trommeloberfläche 6 heranreicht. Die Absperrwand 21 endet mit ihrer oberen Kante zur Schaffung einer Luftdurchtrittsöffnung 22 beabstandet zu den Wänden des Gehäuses 1 endet.

Den Einmündungsöffnungen 17 der Ausbringleitungen 18 sind als vor die Einmündungsöffnungen 17 als verschwenkbare Klappen 23 ausgebildete Absperrmittel angeordnet. Diese Absperrmittel 23 sind mittels motorischer Antriebe 24 betätigbar und in eine die Einmündungsöffnungen 17 freigebende und eine die Einmündungsöffnungen 17 absperrende Stellung verschwenkbar.

Durch das Absperren der jeweiligen Einmündungsöffnung 17 der Ausbringleitungen 18 wird der Luftabfluss aus dem Druckbereich des Vereinzelungsgehäuses 1 eingeschränkt, so dass durch die zugeführte Druckluft über den Anschlussstutzen 9 in den Vereinzelungsbereich 8 des Vereinzelungsgehäuses 1 der Druck ansteigt. Hierdurch wird die durch den Kanal 25 unterhalb der unter den Saatgutvorratsbereich begrenzenden Bodenplatte 26, die im Bereich der Trommel 2 mit nicht dargestellten Durchtrittsöffnungen versehen ist, und das Eintreten der Druckluft in den Vereinzelungsbereich des Saatgutes behindert, so dass die hier durchtretende Luft nicht mehr in ausreichender Weise das Saatgut im Anlagerungsbereich auflockern bzw. fludisieren kann. Hierdurch erhöht sich der dynamische und statische Druck in nachteiliger Weise.

Um auch bei dem Absperren einiger Absperrleitungen 18 durch die Absperrklappen 23 der Druck nicht ansteigen zu lassen, sondern konstant halten zu können, so dass ein bestimmter Druck nicht überschritten wird, sind die Absperrklappen in ihrer Absperrposition vor den Einmündungsöffnungen 17 derart angeordnet, dass zwischen der Einmündungsöffnung 17 unter dem vor die Einmündungsöffnung 17 sich in Absperrstellung befindliche Absperrschieber und oder Absperrklappe 23 sich ein derartiger Spalt 27 befindet, durch den Luft aus dem Gehäuse über die Einmündungsöffnung in die Ausbringleitungen 18 entweichen kann. Der jeweilige Spalt 27 bildet die Überdruckventileinrichtung und/oder Überdruckbegrenzungseinrichtung, die somit den Absperrmitteln zugeordnet ist. Die überschüssige Luft, die zu einem Druckanstieg führen würde, strömt oder entweicht durch den jeweiligen Spalt 27 nach außen.

Somit lässt sich also beim Absperren von Ausbringleitungen 18 in einfacher Weise ein Konstanthalten der Druckdifferenz zwischen dem Innenraum 7 der Vereinzelungstrommel 2 und dem Außenbereich 8 der Vereinzelungstrommel 2 erreichen. Es wird also bei Absperrung der Ausbringleitungen 18 für ein Konstanthalten des statischen und dynamischen Drucks im Überdruckbereich der Vereinzelungsvorrichtung gesorgt.

## Patentansprüche

1. Pneumatische Einzelkornsämaschine mit einem einen Saatgutvorratsbehälter aufweisenden Gehäuse und zumindest einer drehbar angetriebenen Vereinzelungstrommel, in deren Umfangsmantel kreisförmig in Perforationsreihen angeordnete Perforationen angebracht sind, einem Gebläse, mittels welchem eine Druckdifferenz zwischen dem Innenraum der Vereinzelungstrommel und dem Außenbereich der Vereinzelungstrommel erzeugbar ist, so dass, wenn die Vereinzelungstrommel durch den Saatgutvorrat geführt wird, sich an den Perforationen auf der Außenseite der perforierten Trommel Samenkörner anlagern, wobei das Gehäuse zwei voneinander beabstandete Seitenwände aufweist, die sich parallel zur Bewegungsrichtung der Trommel erstrecken und mit der Trommel zumindest annähernd abdichtend zusammenwirken, wobei eine die an die Perforationen angelegte Druckdifferenz zum Ablösen der Saatkörner von den Perforationen unterbrechende Abdeckeinrichtung im Innenraum der Trommel angeordnet ist, wobei im Bereich der Abdeckeinrichtung und den Perforationsreihen jeweils das eine Ende einer Ausbringleitung mit ihrer Einmündungsöffnung bis an die Trommeloberfläche zumindest annähernd heranreichend angeordnet ist, wobei der Saatgutvorratsbehälter und die Trommel im Gehäuse mit einem Überdruck gegenüber dem Atmosphärendruck beaufschlagt sind, **dadurch gekennzeichnet, dass** zumindest einigen Ausbringleitungen (18) motorisch betätigbare Absperrmittel (25) zugeordnet sind, dass dem Gehäuse (1) zumindest eine Überdruckventileinrichtung und/oder Überdruckbegrenzungseinrichtung (31) zugeordnet ist.

2. Einzelkörnsämaschine nach Anspruch 1 **dadurch gekennzeichnet, dass** bei überschreiben eines festgelegten Grenzwertes Luft aus dem Gehäuse (1) über die Überdruckventileinrichtung und/oder Überdruckbegrenzungseinrichtung (31) entweichen kann.

3. Einzelkornsämaschine nach Anspruch 1, **dadurch gekennzeichnet, dass** die Überdruckventileinrichtung und/oder Überdruckbegrenzungseinrichtung (31) als einen Spalt zwischen den Wänden des Gehäuses (1) abdeckende elastische Dichtung (20) ausgebildet ist.

4. Einzelkornsämaschine nach Anspruch 1, **dadurch gekennzeichnet, dass** die Überdruckventileinrichtung und/oder Überdruckbegrenzungseinrichtung (31) als zumindest einer von im Gehäuse (1) angeordneten Aussparung und/oder Durchlass (29), die von elastischen oder elastisch beaufschlagten Abdeckelementen (30) abgedeckt sind, ausgebildet ist.

5. Einzelkornsämaschine nach Anspruch 4, **dadurch gekennzeichnet, dass** das elastische Abdeckelement (29) als Dichtlippe (20) ausgebildet ist.

6. Einzelkornsämaschine nach zumindest einem der vorstehenden Ansprüche, **dadurch gekennzeichnet, dass** die Überdruckventileinrichtung und/oder Überdruckbegrenzungseinrichtung (31) mittels vorzugsweise motorischer Einstellmittel einstellbar ist.

7. Einzelkornsämaschine nach Anspruch 1, **dadurch gekennzeichnet, dass** die Überdruckventileinrichtung und/oder Überdruckbegrenzungseinrichtung (27) den Absperrmitteln (23) zugeordnet ist.

8. Einzelkörnsämaschine nach Anspruch 7, **dadurch gekennzeichnet, dass** die Absperrmittel als vor die Einmündungsöffnung (17) bringbare Absperrschieber und/oder Absperrklappen (23) ausgebildet sind, dass zwischen der Einmündungsöffnung (17) und dem vor die Einmündungsöffnung (17) sich in Absperrstellung befindliche Absperrschieber und oder Absperrklappe (23) sich ein derartiger Spalt (27) befindet, durch den Luft aus dem Gehäuse (1) der Vereinzelungseinrichtung entweichen kann.

## Claims

1. Pneumatic single grain seeder with a housing having a seed storage container, and at least one rotatably driven singulating drum, the circumferential lateral surface of which is provided with perforations arranged in a circular manner in rows of perforations, a blower, by means of which a pressure differential between the interior of the singulating drum and the exterior region of the singulating drum can be produced such that, when the singulating drum is guided through the seed store, grains accumulate at the perforations on the outer side of the perforated drum, wherein the housing has two spaced-apart side walls which extend parallel to the direction of movement of the drum and interact with the drum in an at least approximately sealing manner, wherein a covering device which interrupts the pressure differential applied at the perforations in order to detach the grains from the perforations is arranged in the interior of the drum, wherein, in the region of the covering device and the rows of perforations, in each case one end of a dispensing line is arranged with the mouth opening thereof extending at least approximately as far as the drum surface, and wherein the seed storage container and the drum are acted upon in the housing with an excess pressure in relation to the atmospheric pressure, **characterized in that** at least some of the dispensing lines (18) are assigned motor-actuable shut-off means (25), and **in that** the housing (1) is assigned at least one excess-pressure-relief valve device and/or excess-pressure-limiting device (31).

2. Single grain seeder according to Claim 1, **characterized in that**, when a defined limit value is exceeded, air can escape from the housing (1) via the excess-pressure-relief valve device and/or excess-pressure-limiting device (31).

3. Single grain seeder according to Claim 1, **characterized in that** the excess-pressure-relief valve device and/or excess-pressure-limiting device (31) are/is designed as an elastic seal (20) covering a gap between the walls of the housing (1).

4. Single grain seeder according to Claim 1, **characterized in that** the excess-pressure-relief valve device and/or excess-pressure-limiting device (31) are/is designed as at least one recess and/or passage (29) arranged in the housing (1) and covered by covering elements (30) which are elastic or are acted upon elastically.

5. Single grain seeder according to Claim 4, **characterized in that** the elastic covering element (29) is designed as a sealing lip (20).

6. Single grain seeder according to at least one of the preceding claims, **characterized in that** the excess-pressure-relief valve device and/or excess-pressure-limiting device (31) are/is adjustable by means of a preferably motorized adjustment means.

7. Single grain seeder according to Claim 1, **characterized in that** the excess-pressure-relief valve device and/or excess-pressure-limiting device (27) are/is assigned to the shut-off means (23).

8. Single grain seeder according to Claim 7, **characterized in that** the shut-off means are designed as shut-off slides and/or shut-off flaps (23) which can be brought in front of the mouth opening (17), and **in that** between the mouth opening (17) and the shut-off slide and/or shut-off flap (23) located in front of the mouth opening (17) in the shut-off position there is a gap (27) through which the air can escape from the housing (1) of the singulating device.

## Revendications

1. Semoir monograine pneumatique, comportant un boîtier comprenant un réservoir de semences et au moins un tambour séparateur entraîné en rotation dans l'enveloppe périphérique duquel sont pratiquées des perforations disposées de manière circulaire en rangées de perforations, une soufflante au moyen de laquelle une différence de pression peut être produite entre l'espace intérieur du tambour séparateur et la région extérieure du tambour séparateur, de sorte que, lorsque le tambour séparateur est guidé à travers la réserve de semences, des graines de semences s'accumulent au niveau des perforations sur le côté extérieur du tambour perforé, le boîtier comprenant deux parois latérales espacées l'une de l'autre qui s'étendent parallèlement à la direction de déplacement du tambour et qui coopèrent avec le tambour de manière au moins approximativement étanche, un dispositif de recouvrement interrompant la différence de pression appliquée aux perforations pour décrocher les graines de semences des perforations étant disposé dans l'espace intérieur du tambour et, dans la région du dispositif de recouvrement et des rangées de perforations, l'une des extrémités d'une conduite de distribution étant respectivement disposée de manière à ce que son ouverture d'embouchure s'étende au moins approximativement jusqu'à la surface du tambour, le réservoir de semences et le tambour dans le boîtier étant sollicités par une surpression par rapport à la pression atmosphérique, **caractérisé en ce que** des moyens de blocage (25) pouvant être actionnés de manière motorisée sont associés à au moins certaines conduites de distribution (18), et **en ce qu'**au moins un dispositif de soupape de surpression et/ou un dispositif de limitation de surpression (31) sont associés au boîtier (1).

2. Semoir monograine selon la revendication 1, **caractérisé en ce que** lorsqu'une valeur limite déterminée est dépassée, de l'air peut s'échapper hors du boîtier (1) au moyen du dispositif de soupape de surpression et/ou du dispositif de limitation de surpression (31).

3. Semoir monograine selon la revendication 1, **caractérisé en ce que** le dispositif de soupape de surpression et/ou le dispositif de limitation de surpression (31) sont réalisés sous forme de joint d'étanchéité élastique (20) recouvrant un interstice entre les parois du boîtier (1).

4. Semoir monograine selon la revendication 1, **caractérisé en ce que** le dispositif de soupape de surpression et/ou le dispositif de limitation de surpression (31) sont réalisés sous forme d'au moins un évidement et/ou passage (29) disposés dans le boîtier (1), qui sont recouverts par des éléments de recouvrement (30) élastiques ou sollicités de manière élastique.

5. Semoir monograine selon la revendication 4, **caractérisé en ce que** l'élément de recouvrement élastique (29) est réalisé sous forme de lèvre d'étanchéité (20).

6. Semoir monograine selon au moins l'une quelconque des revendications précédentes, **caractérisé en ce que** le dispositif de soupape de surpression et/ou le dispositif de limitation de surpression (31) peuvent être ajustés au moyen de moyens d'ajustage de préférence motorisés.

7. Semoir monograine selon la revendication 1, **caractérisé en ce que** le dispositif de soupape de surpression et/ou le dispositif de limitation de surpression (27) sont associés aux moyens de blocage (23).

8. Semoir monograine selon la revendication 7, **caractérisé en ce que** les moyens de blocage sont réalisés sous forme de coulisseaux de blocage et/ou de clapets de blocage (23) pouvant être amenés devant l'ouverture d'embouchure (17), et **en ce qu'**un interstice (27) de ce type se trouve entre l'ouverture d'embouchure (17) et le coulisseau de blocage et/ou le clapet de blocage (23) se situant dans la position de blocage devant l'ouverture d'embouchure (17), à travers lequel interstice de l'air peut s'échapper hors du boîtier (1) du dispositif séparateur.
